(19) **Europäisches Patentamt / European Patent Office / Office européen des brevets**

(11) **EP 2 500 592 A1**

(12) **EUROPEAN PATENT APPLICATION**

(43) Date of publication:
**19.09.2012 Bulletin 2012/38**

(51) Int Cl.:
*F16C 33/76* (2006.01)  *F16C 33/78* (2006.01)
*F16J 15/32* (2006.01)  *F16J 15/447* (2006.01)

(21) Application number: **11163575.1**

(22) Date of filing: **22.04.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **17.03.2011 EP 11305297**

(71) Applicant: **Aktiebolaget SKF**
**415 50 Göteborg (SE)**

(72) Inventors:
• **Varnoux, Laurent**
  **37550, Saint Avertin (FR)**
• **Zennir, Yannick**
  **37260, Monts (FR)**
• **Perrotin, Thomas**
  **37390, Saint Roch (FR)**

(74) Representative: **Casalonga, Axel**
**Casalonga & Partners**
**Bayerstrasse 71-73**
**80335 München (DE)**

(54) **Sealing device, notably for a rolling bearing**

(57)    The sealing device is designed to be mounted between two elements rotatable relative to one another, notably rings of a rolling bearing. The sealing device comprises a seal 26 and a shield 28 adapted to be coupled to one of the two elements and arranged laterally to the seal so as to define a gap 30 therebetween. The seal comprises at least one sealing lip 42 which bears against a radial portion 28a of the shield. The thickness of the sealing lip increases from a base portion of said lip towards its free end which is in friction contact with the shield.

FIG.1

EP 2 500 592 A1

**Description**

The present invention relates to sealing devices, and in particular those used in rolling bearings.

In a rolling bearing, one or more sealing devices are generally used to keep the lubricant, such as grease, inside the bearing and to prevent ingress of foreign matter. Generally, the sealing devices are attached to one of the rings of the rolling bearing and cooperate with the other ring.

International patent application WO-A1-2010/133240 (SKF) discloses a rolling bearing comprising an inner ring, an outer ring and two sealing devices to close the radial space existing between the rings. Each sealing device comprises a seal radially disposed between the rings and an annular shield fixed to the inner ring and arranged laterally to the seal as to define a gap therebetween. The seal comprises an outer sealing lip in friction contact with a radial portion of the shield. The sealing lip is deformed by the axial contact with the shield.

However, with such a sealing device, the outer sealing lip of the seal may be too stiff when the axial interference with the shied is applied. The deformation of the sealing lip is thus limited and the sealing properties of the sealing device may be affected.

One aim of the present invention is to overcome these drawbacks.

It is a particular object of the present invention to provide a sealing device which is simple to manufacture and to assembly while guaranteeing good sealing properties.

Another object of the present invention is to provide a sealing device suitable for a rolling bearing.

In one embodiment, a sealing device designed to be mounted between two elements rotatable relative to one another, notably rings of a rolling bearing, comprises a seal and a shield adapted to be coupled to one of the two elements and arranged laterally to the seal so as to define a gap therebetween. The seal comprises at least one sealing lip which bears against a radial portion of the shield. The thickness of the sealing lip increases from a base portion of said lip towards its free end which is in friction contact with the shield.

In one preferred embodiment, the thickness of the sealing lip gradually increases from the base portion towards the free end of said lip. Advantageously, the tip edge of the free end of the sealing lip in friction contact with the shield has in cross-section a triangular shape.

In one embodiment, the thickness $t_1$ of the base portion of the sealing lip and the thickness $t_2$ of the free end of said lip are defined by:

$$\frac{0,6}{D^3} \leq (t_1 + t_2)^3 \leq \frac{1,2}{D^3}$$

with D corresponding to the inner diameter of the base portion of the sealing lip.

Alternatively or in combination, the thickness $t_1$ of the base portion of the sealing lip and the thickness $t_2$ of the free end of said lip are defined by:

$$\frac{0,15}{D^2} \leq t_1 \times t_2 \leq \frac{0,25}{D^2}$$

with D corresponding to the inner diameter of the base portion of the sealing lip.

Preferably, the thickness $t_1$ of the base portion of the sealing lip and the thickness $t_2$ of the free end of said lip are defined by:

$$0,064 \leq (t_1 + t_2)^3 \leq 512$$

Alternatively or in combination, the thickness $t_1$ and the thickness $t_2$ are defined by:

$$0,03 \leq t_1 \times t_2 \leq 12$$

Preferably, the sealing lip is delimited by an upper surface and a lower surface which are flat in a free state. The angle formed in a free state between the upper surface of the sealing lip and an outer surface of the seal from which extends said sealing lip is from 20° to 70°, preferably from 40° to 60°, and advantageously from 45° to 50°.

The sealing lip may be in friction contact with an inner surface of the radial portion of the shield. The sealing lip may be deformed by the axial contact with the radial portion of the shield. In one embodiment, the difference between the axial length $L_1$ of the sealing lip and an axial space $L_2$ defined between an outer surface of the seal from which extends said sealing lip and the radial portion of the seal may be strictly greater than 0. For instance, the difference between the axial length $L_1$ and the axial space $L_2$ is from 50 $\mu$m to 300 $\mu$m. Advantageously, the sealing lip extends obliquely in a free state.

In one embodiment, the seal comprises two sealing lips bearing against the shield and delimiting an annular chamber.

In one embodiment, the seal is provided with a rigid core member and with an elastic sealing member which at least partially covers the core member, the elastic sealing member comprising two radially opposed inner and outer sealing portions. The inner sealing portion of the elastic member may be provided with at least one sealing lip adapted to cooperate with the other of the two elements.

In another aspect of the invention, a rolling bearing comprises an inner ring, an outer ring, at least one row of rolling elements disposed between the rings, and at least one sealing device as previously defined, whereby the seal is attached to one of the rings, and the shield is attached to the other of the rings.

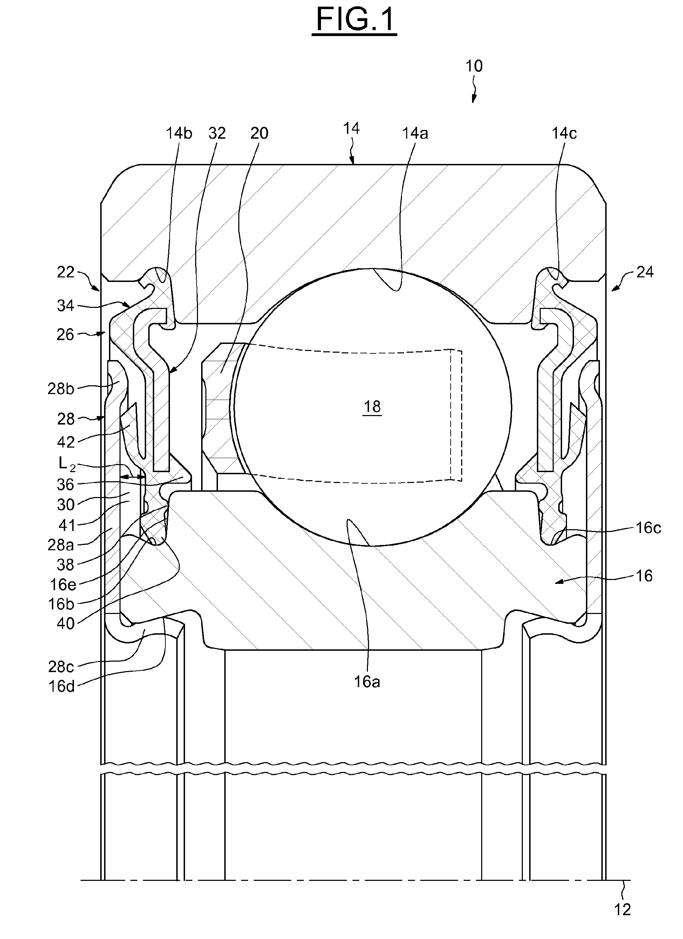

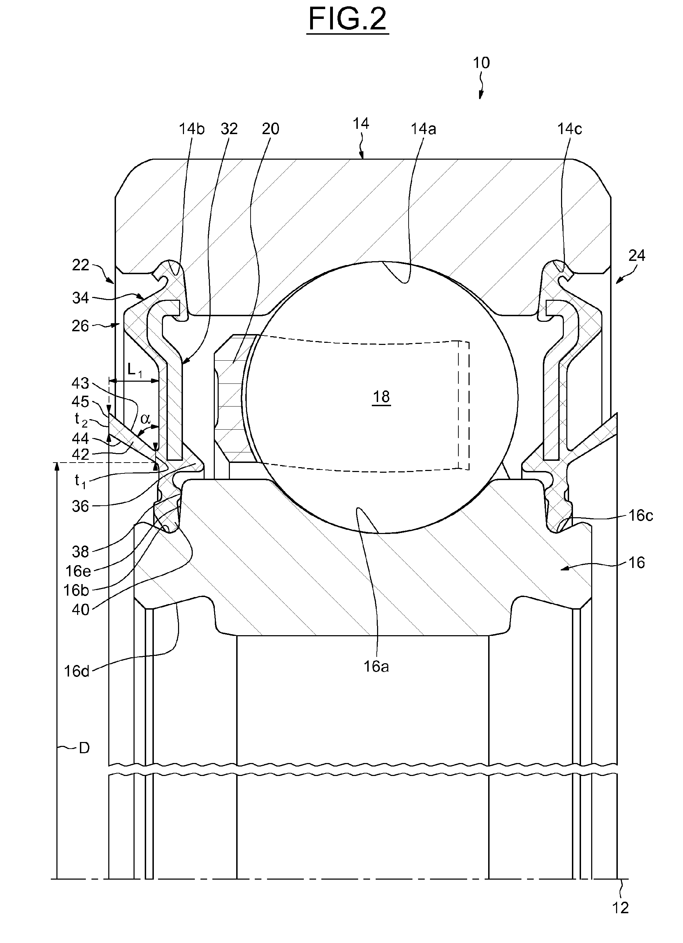

The present invention and its advantages will be better understood by studying the detailed description of a specific embodiment given by way of non-limiting example and illustrated by the appended drawings in which Figures 1 and 2 show axial half-sections of a rolling bearing according to an example of the invention.

As illustrated on Figure 1, which illustrates an embodiment of a rolling bearing 10 according to the invention, the bearing, with an axis 12, comprises an outer ring 14, an inner ring 16, a plurality of rolling elements 18, which in this case are balls, interposed between the rings, and a cage 20 for maintaining said rolling elements circumferentially spaced apart. On each of the opposite sides of the rolling bearing 10 there is an annular sealing device 22, 24 to close the radial space that exists between the rings 14, 16. The sealing devices 22, 24 are identical to one another and symmetrical relative to a transverse radial plane passing through the centre of the rolling bearing 10.

The inner and outer rings 14, 16 are concentric and symmetric with respect to the transverse radial plane passing through the centre of the rolling bearing 10. The rings are of the solid type. One of the rings rotates while the other is fixed or also rotates. The outer ring 14 comprises a toroidal circular raceway 14a formed onto its bore and two annular recesses or grooves 14b, 14c formed radially towards the outside from the bore and arranged laterally to the raceway. The grooves 14b, 14c are symmetrical relative to the radial plane passing through the centre of the rolling bearing 10.

Similarly, the inner ring 16 comprises a toroidal circular raceway 16a formed onto its outer axial surface and two annular recesses or grooves 16b, 16c formed radially towards the inside from the outer surface and arranged laterally to the raceway. The groove 16b, 16c is respectively situated in a radial plane containing the groove 14b, 14c of the outer ring.

The sealing device 22 is arranged radially between the outer and inner rings 14, 16 and is provided with an inner seal 26 which is fixed to the outer ring and which is arranged laterally to the rolling elements 18, and with an annular outer shield 28 which is coupled to the inner ring 16 and which is arranged laterally to the inner seal 26 in order to define an annular axial gap 30 with said seal.

The outer shield 28 of the sealing device may be made from metal or from thermoplastic. The shield 28 extends radially towards the outer ring 14 and has an inner surface that faces towards an opposing outer surface of the seal 26 to define the axial gap 30. The shield 28 comprises a radial portion 28a which is arranged in axial direct contact with a radial transverse surface of the inner ring 16, and an outer shaped edge 28b extending radially outwards said radial portion 28a. The shaped edge 28b of the shield 28 is outwardly concave and inwardly convex, and defines with an axially extending protrusion of the seal 26 an entrance of the gap 30, in the form of a narrow or labyrinth passage in order to reduce the intrusion of contaminants. The shield 28 further comprises an assembly portion 28c which is radially opposed to the shaped edge 28b with respect to the radial portion 28a. The assembly portion 28c is arranged inside an annular groove 16d made in the bore of the inner ring 16 in order to prevent the dismounting of the shield 28 from said ring.

The seal 26 of the sealing device is provided with a rigid insert or core member 32 made of metal or thermoplastic and with an elastic sealing member 34 made of rubber, synthetic resin, polymer or the like, which partially covers the core member 32.

The sealing member 34 covers an outer surface of the core member 32 and forms two radially opposed peripheral sealing portions applying respectively a static sealing with the outer ring 14 and a dynamic sealing with the inner ring 16. The outer sealing portion of the elastic member 34 is press-fitted in the groove 14b of the outer ring 14 in order to attach the seal 26 to said ring. At the groove 14b, the outer sealing portion matches the shape of said groove to form a means for fixing or attaching the seal 26 to the outer ring 14. The outer sealing portion surrounds the outer portion of the core member 32 so that only the elastic sealing member 34 is in contact with the outer ring 14.

The inner sealing portion of the elastic member 34 is provided with first, second and third inner sealing lips 36, 38 and 40, which are concentric with each other and which extend axially inwards. The third lip 40 bears against the groove 16b and against a radial wall 16e of the inner ring delimiting axially said groove. The second lip 38 has a larger diameter than the lip 40 and bears axially against the radial wall 16e. The first lip 36 has a larger diameter than the lips 38, 40 and extends axially inward of the radial wall 16e, over the outer axial surface of the inner ring 16. The lip 36 has an axial cylindrical surface which forms a labyrinth with the outer surface of the inner ring 16. The inner lip 36 is in direct contact with the inner portion of the core member 32 and is linked to the other two inner lips 38, 40 by means of a radial annular bridge.

The inner sealing portion of the elastic member 34 further comprises an outer sealing lip 42 extending towards the outside of the rolling bearing 10 and bearing against the inner surface of the shield 28 to create an sealed axial chamber 41 between the seal 26 and said shield. The sealed chamber 41 defines a tank for grease. The lip 42 is provided in the most outer location with regard to the other lips 36 to 40. In other words, the outer lip 42 is axially offset towards the outside relative to the inner lips 36 to 40. The outer lip 42 is formed on the outer portion of the core member 32 and is located axially on the opposite side of the inner lip 36 relative to said core, and extends therefrom outwards. During operation of the rolling bearing 10, the outer lip 42 is in sliding contact with the radial portion 28a of shield 28.

In Figure 2, the outer lip 42 of the seal 26 is shown in a free state, not deformed by the axial contact with the shield 28. The lip 42 extends obliquely outwards from the outer surface of the inner sealing portion of the elastic member 34 and radially outwards. The outer lip 42 comprises a base portion having a thickness $t_1$ and a free end having a thickness $t_2$ greater than the thickness $t_1$. In the illustrated embodiment, the thickness of the lip 42 gradually increases from the base portion towards and until the free end. With an outer lip 42 having a root or base portion thinner than its free end, the axial and radial deformations of said lip may be easily obtained when the shield 28 is mounted onto the inner ring 16.

Advantageously, the thickness $t_1$ and the thickness $t_2$ are defined by:

$$\frac{0,6}{D^3} \leq (t_1 + t_2)^3 \leq \frac{1,2}{D^3}$$

with D corresponding to the inner diameter of the base portion of the outer sealing lip 42 as shown on Figure 2. For instance, the inner diameter D of the base portion may be from 5 to 600 mm.

Alternatively or in combination, the thickness $t_1$ and the thickness $t_2$ may also be defined by:

$$\frac{0,15}{D^2} \leq t_1 \times t_2 \leq \frac{0,25}{D^2}$$

Preferably, the thickness $t_1$ and the thickness $t_2$ are defined by:

$$0,064 \leq (t_1 + t_2)^3 \leq 512$$

Alternatively or in combination, the thickness $t_1$ and the thickness $t_2$ are defined by:

$$0,03 \leq t_1 \times t_2 \leq 12$$

In a free state, the free end of the lip 42 is axially offset relative to the radial transverse surfaces of the outer and inner rings 14, 16 towards the outside of the rolling bearing. The outer lip 42 is delimited radially by an upper inclined surface 43 and a lower inclined surface 44 which are flat in the free state condition. Preferably, these two surfaces are entirely flat. Further, these two surfaces are delimitated axially by an end surface 45 which is, in the free state condition, also flat but which extends radially. The outer lip 42 has a frustoconical form. Advantageously, the angle $\alpha$ formed in a free state between the upper inclined surface 43 of the sealing lip and the outer surface of the inner sealing portion of the sealing member 34 which radially surrounds said upper surface is from 20° to 70°, preferably from 40° to 60°, and advantageously from 45° to 50°.

As shown on Figure 1, after the mounting of the shield 28 on the inner ring 16, the outer sealing lip 42 of the seal is deformed by the axial contact with the radial portion 28a of said shield. The axial length $L_1$ (Figure 2) of the sealing lip 42 in a free state is greater than the axial space $L_2$ (Figure 1) defined between the outer surface of the inner sealing portion of the sealing member 34 and the inner surface of the radial portion 28a of the shield. The difference between the axial length $L_1$ and the axial space $L_2$ is strictly greater than 0. Advantageously, the difference between the axial length $L_1$ and the axial space $L_2$ is from 50 $\mu$m to 300 $\mu$m.

After the mounting of the shield 28, a tip edge of the free end of the outer sealing lip 28 is in friction contact with the radial portion 28a of the shield. In the disclosed embodiment, where the outer lip 42 extends obliquely and radially outwards, this tip edge is at the junction of the end surface 45 and the lower inclined surface 44. This tip edge has in cross-section a triangular shape. An annular linear contact exists between the tip edge of the sealing lip 42 and the shield 28. With such a contact, when wear appears, there is less friction than with a rounded portion for the tip edge. Besides, even if the pressing force of the lip 42 is low, the surface pressure of the lip 42 on the shield 28 increases. Hence, even with a small axial interference between the outer lip 42 and the shield 28, intrusion of foreign matter can be effectively prevented.

In the disclosed embodiment, the seal 26 of the sealing device comprises only one outer oblique friction sealing lip 42 extending radially outwards. It should be understood that it is possible to foresee an outer oblique lip extending radially inwards. In another variant, it could also be possible to foresee a different number of outer friction lips bearing against the radial shield, for example two lips which may be arranged essentially parallel to each other, or symmetric with regard to an axial plane, and delimiting an additional annular sealed chamber formed therebetween. In another embodiment, the number and/or the design of the inner lips 36 to 40 may also be different. It could also be possible to provide a seal without a core member.

## Claims

1. Sealing device designed to be mounted between two elements rotatable relative to one another, notably rings of a rolling bearing, the sealing device comprising a seal (26) and a shield (28) adapted to be coupled to one of the two elements and arranged laterally to the seal so as to define a gap (30) therebetween, the seal comprising at least one sealing lip (42) which bears against a radial portion (28a) of the shield, **characterized in that** the thickness of the sealing lip increases from a base portion of said lip towards its free end which is in friction contact with the shield.

2. Sealing device according to claim 1, wherein the thickness of the sealing lip (42) gradually increases from the base portion towards the free end of said lip.

3. Sealing device according to claim 1 or 2, wherein the tip edge of the sealing lip (42) in friction contact with the shield has in cross-section a triangular shape.

4. Sealing device according to any of the preceding claims, wherein the thickness ($t_1$) of the base portion of the sealing lip (42) and the thickness ($t_2$) of the free end of said lip are defined by:

$$\frac{0,6}{D^3} \leq (t_1 + t_2)^3 \leq \frac{1,2}{D^3}$$

with D corresponding to the inner diameter of the base portion of the sealing lip.

5. Sealing device according to any of the preceding claims, wherein the thickness ($t_1$) of the base portion of the sealing lip (42) and the thickness ($t_2$) of the free end of said lip are defined by:

6. Sealing device according to any of the preceding claims, wherein the thickness ($t_1$) of the base portion of the sealing lip (42) and the thickness ($t_2$) of the free end of said lip are defined by:

$$\frac{0,15}{D^2} \leq t_1 \times t_2 \leq \frac{0,25}{D^2}$$

with D corresponding to the inner diameter of the base portion of the sealing lip.

7. Sealing device according to any of the preceding claims, wherein the thickness ($t_1$) of the base portion of the sealing lip (42) and the thickness ($t_2$) of the free end of said lip are defined by:

$$0,03 < t_1 \times t_2 \leq 12$$

8. Sealing device according to any of the preceding claims, wherein the sealing lip (42) is delimited by an upper surface (43) and a lower surface (44) which are flat in a free state.

9. Sealing device according to claim 8, wherein the angle ($\alpha$) formed in a free state between the upper surface (43) of the sealing lip and an outer surface of the seal from which extends said sealing lip is from 20° to 70°, preferably from 40° to 60°, and advantageously from 45° to 50°.

10. Sealing device according to any of the preceding claims, wherein the sealing lip (42) is in friction contact with an inner surface of the radial portion (28) of the shield.

11. Sealing device according to any of the preceding claims, wherein the sealing lip (42) is deformed by the axial contact with the radial portion (28) of the shield.

12. Sealing device according to any of the preceding claims, wherein the difference between the axial length ($L_1$) of the sealing lip (42) and an axial space ($L_2$) defined between an outer surface of the seal from which extends said sealing lip and the radial portion (28) of the shield is strictly greater than 0.

13. Sealing device according to claim 12, wherein the difference between the axial length ($L_1$) and the axial space ($L_2$) is from 50 $\mu$m to 300 $\mu$m.

14. Sealing device according to any of the preceding claims, wherein the sealing lip (42) extends obliquely in a free state.

15. Sealing device according to any of the preceding claims, wherein the seal comprises two sealing lips bearing against the shield and delimiting an annular chamber.

16. Sealing device according to any of the preceding claims, wherein the seal is provided with a rigid core member (32) and with an elastic sealing member (34) which at least partially covers the core member, the elastic sealing member comprising two radially opposed inner and outer sealing portions.

17. Sealing device according to claim 16, wherein the inner sealing portion of the elastic member (34) is provided with at least one sealing lip (36, 38, 40) adapted to cooperate with the other of the two elements.

18. Rolling bearing comprising an inner ring (16), an outer ring (14), at least one row of rolling elements (18) disposed between the rings, and at least one sealing device according to any one of the preceding claims, whereby the seal (26) is attached to one of the rings, and the shield (28) is attached to the other of the rings.

# FIG.1

# FIG.2

Europäisches
Patentamt

European
Patent Office

Office européen
des brevets

## EUROPEAN SEARCH REPORT

Application Number

EP 11 16 3575

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2007 270859 A (JTEKT CORP) 18 October 2007 (2007-10-18) * paragraphs [0003], [0004], [0020] * * figures 1,2 * | 1-8, 10-18 | INV. F16C33/76 F16C33/78 F16J15/32 F16J15/447 |
| X | JP 2005 291450 A (NSK LTD) 20 October 2005 (2005-10-20) * paragraphs [0010], [0050] - [0054], [0058] * * figures 1-4 * | 1-16,18 | |
| X | JP 2005 016603 A (NSK LTD) 20 January 2005 (2005-01-20) * paragraphs [0005], [0033] - [0037] * * figures 1-3,11 * | 1-16,18 | |
| X | US 2007/187901 A1 (MATSUI HIROKI [JP]) 16 August 2007 (2007-08-16) * paragraph [0017] - paragraph [0023] * * figure 1 * | 1-3, 10-14,18 | |

TECHNICAL FIELDS
SEARCHED (IPC)

F16C
F16J

The present search report has been drawn up for all claims

| Place of search | Date of completion of the search | Examiner |
|---|---|---|
| Munich | 27 June 2012 | Schlossarek, M |

EPO FORM 1503 03.82 (P04C01)

**ANNEX TO THE EUROPEAN SEARCH REPORT
ON EUROPEAN PATENT APPLICATION NO.**

EP 11 16 3575

This annex lists the patent family members relating to the patent documents cited in the above-mentioned European search report.
The members are as contained in the European Patent Office EDP file on
The European Patent Office is in no way liable for these particulars which are merely given for the purpose of information.

27-06-2012

| Patent document cited in search report | Publication date | Patent family member(s) | Publication date |
|---|---|---|---|
| JP 2007270859 A | 18-10-2007 | NONE | |
| JP 2005291450 A | 20-10-2005 | NONE | |
| JP 2005016603 A | 20-01-2005 | NONE | |
| US 2007187901 A1 | 16-08-2007 | EP 1729046 A1<br>JP 4748319 B2<br>KR 20060130752 A<br>US 2007187901 A1<br>WO 2005090839 A1 | 06-12-2006<br>17-08-2011<br>19-12-2006<br>16-08-2007<br>29-09-2005 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010133240 A1